(19) Europäisches Patentamt
European Patent Office
Office européen des brevets

(11) **EP 2 828 945 B1**

(12) **EUROPÄISCHE PATENTSCHRIFT**

(45) Veröffentlichungstag und Bekanntmachung des Hinweises auf die Patenterteilung:
**22.03.2017 Patentblatt 2017/12**

(21) Anmeldenummer: **13731053.8**

(22) Anmeldetag: **11.06.2013**

(51) Int Cl.:
*H02J 3/16* (2006.01)       *H02J 3/18* (2006.01)
*H02J 3/50* (2006.01)

(86) Internationale Anmeldenummer:
**PCT/EP2013/061950**

(87) Internationale Veröffentlichungsnummer:
**WO 2014/001073 (03.01.2014 Gazette 2014/01)**

(54) **VERFAHREN UND VORRICHTUNG ZUM REGELN EINER SPANNUNG IN EINEM VERTEILNETZ**

METHOD AND DEVICE FOR REGULATING A VOLTAGE IN A DISTRIBUTION NETWORK

PROCÉDÉ ET DISPOSITIF PERMETTANT DE RÉGULER UNE TENSION DANS UN RÉSEAU DE DISTRIBUTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2012 DE 102012211267**

(43) Veröffentlichungstag der Anmeldung:
**28.01.2015 Patentblatt 2015/05**

(73) Patentinhaber: **Siemens Aktiengesellschaft**
**80333 München (DE)**

(72) Erfinder:
• **BUHL, Michael, Bernhard**
**85567 Grafing (DE)**
• **BAMBERGER, Joachim**
**80999 München (DE)**
• **METZGER, Michael**
**85570 Markt Schwaben (DE)**
• **SOLLACHER, Rudolf**
**84174 Eching (DE)**

(56) Entgegenhaltungen:
**US-A1- 2012 119 586     US-B2- 8 183 714**

• **LAAKSONEN H ET AL: "Voltage and Frequency Control of Inverter Based Weak LV Network Microgrid", FUTURE POWER SYSTEMS, 2005 INTERNATIONAL CONFERENCE ON AMSTERDAM, THE NETHERLANDS 16-18 NOV. 2005, PISCATAWAY, NJ, USA,IEEE, 16. November 2005 (2005-11-16), Seiten 1-6, XP010897518, ISBN: 978-90-78205-02-9**
• **SOUVIK DASGUPTA ET AL: "A Plug and Play Operational Approach for Implementation of an Autonomous-Micro-Grid System", IEEE TRANSACTIONS ON INDUSTRIAL INFORMATICS, IEEE SERVICE CENTER, NEW YORK, NY, US, Bd. [online prepublication], 6. April 2012 (2012-04-06), Seiten 1-15, XP009176155, ISSN: 1551-3203**

EP 2 828 945 B1

**Beschreibung**

Verteilnetze, insbesondere Niederspannungsnetze, werden zunehmend durch dezentrale Energieerzeugung, beispielsweise durch Photovoltaikanlagen, ausgelegt. Dabei kann es insbesondere bei Niederspannungsverteilnetzen schwierig werden, ein zulässiges Spannungsband bzw. einen zulässigen Netzspannungsbereich einzuhalten. Neben einem Ausbau der Infrastruktur der betroffenen Verteilnetze kann durch gezielten Bezug von Blindleistung und/oder durch die Reduktion einer eingespeisten Wirkleistung sowie durch den Einsatz von regelbaren Ortsnetztransformatoren das Auftreten von Überspannungen in den Netzleitungen vermieden werden. Derartige Maßnahmen, die keinen Ausbau der Infrastruktur des Verteilnetzes erfordern, sind vor allem deshalb interessant, da sie mit einem deutlich geringeren Aufwand verbunden sind und schneller zu realisieren sind als der Ausbau des betroffenen Verteilnetzes.

Eine Spannungsregelung durch Blindleistungsbezug oder durch Reduktion der eingespeisten Wirkleistung stellt eine lokale kontinuierliche Veränderung der Spannung am Ort des jeweils betroffenen Knotens dar, die mithilfe eines Wechselrichters erfolgen kann. Die Wechselrichter der verschiedenen Knoten stellen räumlich verteilte Aktoren dar, die zur Regelung der Spannung in dem Verteilnetz die jeweilige lokale Regelung aufeinander abstimmen. Hierzu bedarf es einer zusätzlichen Kommunikationsinfrastruktur zwischen den Wechselrichtern, die ihrerseits mit einem erheblichen schaltungstechnischen Aufwand verbunden ist.

In der US 2012/119586 A1 sind Verfahren beschrieben, welche zum Synchronisieren mehrerer Gleichstrom-Spannungen dienen, welche von verschiedenen Stromquellen erzeugt werden. Ein Spannungs-Steuersignal, welches eine gewünschte Ausgabespannung indiziert, wird an mehrere Gleichstromsteller ausgegeben, welche mit den Stromquellen gekoppelt sind. Ein Master-Gleichstromsteller wandelt eine Master-Eingangsspannung in eine Master-Ausgangsspannung um, welche der gewünschten Ausgangsspannung im Wesentlichen gleich ist. Die Master-Ausgangsspannung wird den übrigen Gleichstromstellern bereitgestellt, welche daraufhin eine Slave-Eingangsspannung in eine Slave-Ausgabespannung umwandeln, welche der Master-Ausgabespannung im Wesentlichen gleich ist.

In der US 8 183 714 B2 ist ein elektrisches Leistungsverteilungsverfahren und eine entsprechende Vorrichtung beschrieben. Eine Mehrzahl von Endnutzer-Räumlichkeiten wird von einem kommerziellen Stromnetz bedient. Einige, aber nicht alle, der Endnutzer-Räumlichkeiten sind untereinander mittels eines Zuführers verbunden, welcher nicht metallisch mit dem Stromnetz verbunden ist. Die Endbenutzer-Räumlichkeiten weisen jeweils einen örtlichen Wechselstrom-Bus auf, welcher weder mit dem Stromnetz noch mit dem Zuführer metallisch verbunden ist, aber welcher mittels eines Kopplers sowohl mit dem Stromnetz als auch mit dem Zuführer gekoppelt ist. Örtlich erzeugte elektrische Leistung kann mittels des Zuführers an andere Endnutzer-Räumlichkeiten an dem Zuführer übertragen werden.

In der Veröffentlichung von Laaksonen, H. et al.: "Voltage and Frequency Control of Inverter Based Weak LV Network Microgrid", INTERNATIONAL CONFERENCE ON FUTURE POWER SYSTEMS (FPS 2005), Amsterdam, Niederlande, November, 2005, Seiten 1 - 6, XP010897518, ISBN: 978-90-78205-02-9, ist die Steuerung von Spannung und Frequenz eines, nach einem Schaltereignis, isolierten Mikro-Netzwerks beschrieben. Das Mikro-Netzwerk weist eine Batterie und eine Photovoltaik-Zelle auf. Ein Batteriewechselrichter agiert als Master und steuert die Spannung und die Frequenz des Mikro-Netzwerks, wenn dieses von einem Hauptverteilungsnetzwerk isoliert wird. Um eine ausbalancierte Frequenz zu erhalten, ist ein Referenz-Sinuswellengenerator innerhalb des Masters beschrieben, welcher Phasenspannungen des Hauptverteilungsnetzwerks imitiert und zum Steuern des Masters verwendet wird.

In der Veröffentlichung von Dasgupta, S. et al.: "A plug and play operational approach for implementation of an Autonomous-Micro-Grid System", IEEE TRANSACTIONS ON INDUSTRIAL INFORMATICS, Bd. [online prepublication], 6. April 2012, Seiten 1 - 15, XP009176155, ISSN: 1551-3203, ist ein autonomes Mikro-Netzwerks-System beschrieben. Eine Vielzahl von miteinander interagierenden verteilten Energiequellen und Lasten soll sich auf die Stabilität des Mikro-Netzwerk-Systems auswirken. Vorgesehen ist ein kommunikationsloses Betreiben der Elemente des Mikro-Netzwerk-Systems. Eine Frequenzeinspeisung mit einer Signaturfrequenz soll zur Identifizierung einer Anwesenheit eines speziellen, verteilt angeordneten Generators sowie eines Betriebs von verteilt angeordneten Reserve-Generatoren dienen.

Es ist daher eine Aufgabe der vorliegenden Erfindung, ein Verfahren und eine Vorrichtung zum Regeln einer Spannung in einem Verteilnetz zu schaffen, bei dem verteilte Aktoren, insbesondere Wechselrichter, ohne den Bedarf einer zusätzlichen Kommunikationsinfrastruktur zwischen den Aktoren hinsichtlich der lokal geregelten Spannung koordiniert werden können.

Diese Aufgabe wird erfindungsgemäß durch ein Verfahren mit den in Patentanspruch 1 angegebenen Merkmalen gelöst.

Bei einer möglichen Ausführungsform des erfindungsgemäßen Verfahrens nehmen die anderen in einem Slave-Betrieb befindlichen Knoten des Verteilnetzes nach Empfang des Anzeigesignalmusters von dem in den Master-Betrieb geschalteten Knoten unterstützende Maßnahmen für die Regelung der lokal vorhandenen Spannung des in den Master-Betrieb geschalteten Knotens in dem zulässigen Netzspannungsbereich vor.

Bei einer weiteren möglichen Ausführungsform des erfindungsgemäßen Verfahrens ist der Signalparameter des von dem im Master-Betrieb befindlichen Knoten aufmodulierten Anzeigesignalmusters eine Signalamplitude.

Bei einer weiteren möglichen Ausführungsform des erfindungsgemäßen Verfahrens ist der Signalparameter des von dem im Master-Betrieb befindlichen Knoten aufmodulierten Anzeigesignalmusters eine Signalfrequenz.

Bei einer weiteren Ausführungsform des erfindungsgemäßen Verfahrens ist der Signalparameter des von dem im Master-Betrieb befindlichen Knoten aufmodulierten Anzeigesignals proportional zu der Amplitude der von dem in dem Master-Betrieb befindlichen Knoten zur Regelung seiner lokalen Spannung bezogenen oder eingespeisten Blindleistung.

Bei einer weiteren möglichen Ausführungsform des erfindungsgemäßen Verfahrens wird der in dem Master-Betrieb befindliche Knoten in einen Slave-Betrieb zurückgeschaltet, sobald die durch den in den Master-Betrieb geschalteten Knoten lokal vorgenommene Spannungsregelung und/oder die unterstützenden Maßnahmen durch die übrigen in dem Slave-Betrieb befindlichen Knoten des Verteilnetzes dazu geführt haben, dass der in dem Master-Betrieb befindliche Knoten keine Blindleistung mehr aus dem Verteilnetz bezieht oder darin einspeist.

Bei einer möglichen Ausführungsform des erfindungsgemäßen Verfahrens wird das aufmodulierte Anzeigesignalmuster mit der Spannung des Verteilnetzes synchronisiert.

Bei einer weiteren möglichen Ausführungsform des erfindungsgemäßen Verfahrens moduliert der in den Master-Betrieb geschaltete Knoten des Verteilnetzes bei Bezug einer Blindleistung von dem Verteilnetz ein erstes Anzeigesignalmuster der bezogenen Blindleistung auf.

Bei einer weiteren möglichen Ausführungsform des erfindungsgemäßen Verfahrens moduliert der in den Master-Betrieb geschaltete Knoten des Verteilnetzes bei Einspeisen einer Blindleistung in das Verteilnetz ein zweites Anzeigesignalmuster der eingespeisten Blindleistung auf.

Bei einer möglichen Ausführungsform des erfindungsgemäßen Verfahrens wird das Verteilnetz durch ein Niederspannungsnetz gebildet.

Bei einer möglichen Ausführungsform des erfindungsgemäßen Verfahrens ist dieses Niederspannungsnetz an mindestens einem Knoten an ein Mittelspannungsnetz angeschlossen.

Bei einer möglichen Ausführungsform des erfindungsgemäßen Verfahrens moduliert ein in den Master-Betrieb geschalteter Knoten des Mittelspannungsnetzes bei Bezug einer Blindleistung von dem Mittelspannungsnetz ein drittes Anzeigesignalmuster der bezogenen Blindleistung auf.

Bei einer weiteren möglichen Ausführungsform des erfindungsgemäßen Verfahrens moduliert ein in den Master-Betrieb geschalteter Knoten des Mittelspannungsnetzes bei Einspeisen der Blindleistung in das Mittelspannungsnetz ein viertes Anzeigesignalmuster der eingespeisten Blindleistung auf.

Bei einer möglichen Ausführungsform des erfindungsgemäßen Verfahrens ist das aufmodulierte Anzeigesignalmuster ein Sinussignal, dessen Amplitude proportional zu der Amplitude der bezogenen oder eingespeisten Blindleistung ist, die durch den im Master-Betrieb befindlichen Knoten vom Verteilnetz bezogen oder in das Verteilnetz eingespeist wird.

Bei einer möglichen Ausführungsform des erfindungsgemäßen Verfahrens erfolgt die Regelung der lokalen Spannung durch den in den Master-Betrieb geschalteten Knoten mittels eines Integralreglers und/oder eines P-Reglers.

Die Erfindung schafft ferner eine Vorrichtung für einen Knoten zur Regelung einer Spannung in einem Verteilnetz, das den Knoten über Netzleitungen mit Spannung versorgt, mit den Merkmalen des Patentanspruchs 11.

Die Erfindung schafft ferner ein Verteilnetz mit den Merkmalen des Patentanspruchs 12.

Die Vorrichtung weist eine Messeinheit auf, welche einerseits in der Lage ist das aufmodulierte Signal zu erkennen und andererseits für die Spannungsregelung vorgesehen ist.

Im Weiteren werden mögliche Ausführungsformen des erfindungsgemäßen Verfahrens und der erfindungsgemäßen Vorrichtung zum Regeln einer Spannung in einem Verteilnetz unter Bezugnahme auf die beigefügten Figuren näher erläutert.

Es zeigen:

Fig. 1     ein Diagramm zur Darstellung eines Verteilnetzes mit Knoten, an denen jeweils ein Verfahren zur Regelung einer Spannung gemäß der Erfindung durchgeführt werden kann;

Fig. 2     ein weiteres Diagramm zur Erläuterung der Funktionsweise eines erfindungsgemäßen Verfahrens zur Regelung einer Spannung in einem Verteilnetz;

Fig. 3     ein Blockschaltbild eines Ausführungsbeispiels einer erfindungsgemäßen Vorrichtung zur Regelung einer Spannung in einem Verteilnetz;

Fig. 4     ein Diagramm zur Darstellung verschiedener Betriebsarten eines an dem Verteilnetz angeschlossenen Knotens zur Erläuterung der Funktionsweise eines erfindungsgemäßen Verfahrens zum Regeln einer Spannung in einem Verteilnetz;

Fig. 5    ein Diagramm zur Darstellung verschiedener Spannungsverläufe an einem Knoten des Verteilnetzes zur Erläuterung der Funktionsweise des erfindungsgemäßen Verfahrens;

Fig. 6    ein weiteres Diagramm zur Darstellung eines Blindleistungsbezugs an einen Knoten des Verteilnetzes zur Erläuterung der Funktionsweise des erfindungsgemäßen Verfahrens.

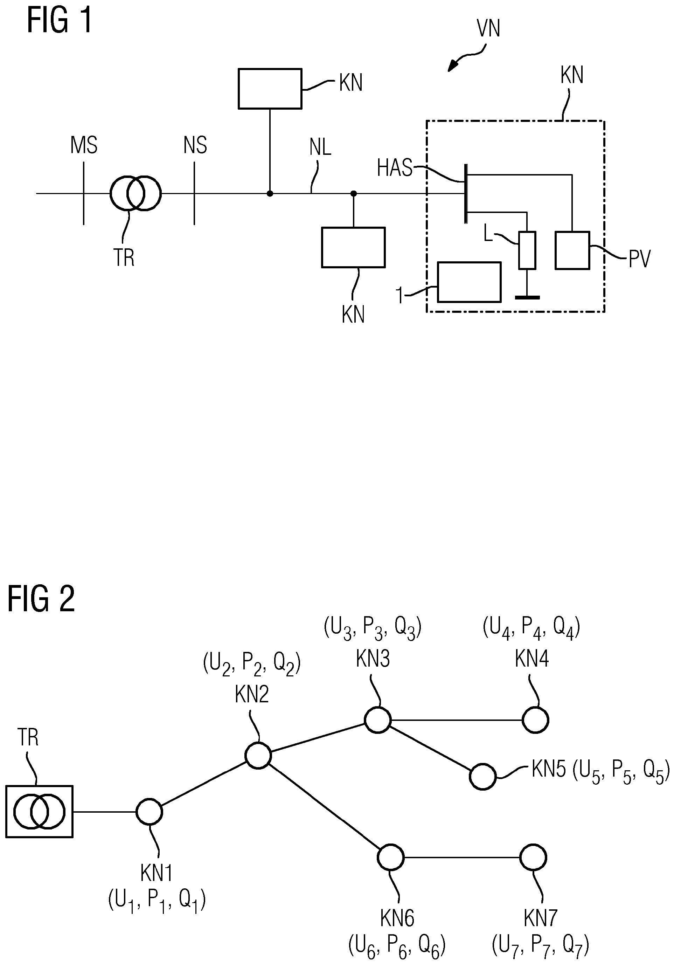

Wie man aus Fig. 1 erkennen kann, weist ein Verteilnetz Netzleitungen NL auf, über die mehrere Knoten KN mit Spannung versorgt werden können. Bei dem dargestellten Ausführungsbeispiel handelt es sich um ein Niederspannungsnetz NSN, das über einen regelbaren Trafo TR mit einem Mittelspannungsnetz MS verbunden ist. Die Netzleitungen NL sind Spannungsversorgungsleitungen, welche Strom bzw. Energie an die verschiedenen Knoten KN übertragen, die jeweils über einen Verbraucher bzw. eine Last L verfügen. Darüber hinaus können die Knoten KN zumindest teilweise auch Energie in das Verteilnetz VN bzw. Niederspannungsnetz NSN einspeisen, beispielsweise mithilfe einer Photovoltaikanlage PV, wie in Fig. 1 dargestellt.
Ein Knoten KN kann beispielsweise mit einem Hausanschluss HAS an Netzleitungen NL des Verteilnetzes VN angeschlossen sein, wie in Fig. 1 dargestellt. Durch das Energieversorgungsnetz bzw. Verteilnetz VN wird Energie von einem Erzeuger zu einem Verbraucher übertragen. Durch die Photovoltaikanlage PV wird zusätzlich dezentral Energie bzw. Strom in das Verteilnetz VN eingespeist. Dadurch kann es zu einer Spannungserhöhung an dem einspeisenden Hausanschluss HAS kommen. Durch Bezug von Blindleistung Q kann diese Spannungserhöhung an dem einspeisenden Hausanschluss bzw. Knoten KN reduziert werden. Die beziehende Blindleistung Q wird dabei vorzugsweise lokal in Abhängigkeit von der an dem Hausanschluss HAS vorhandenen Überspannung entsprechend eingestellt. Bei dem erfindungsgemäßen Verfahren wird diese lokale Beziehung der an dem Knoten KN vorhandenen Spannung zusätzlich durch weitere Knoten KN innerhalb des Verteilnetzes VN unterstützt.
So weisen die Knoten KN jeweils eine Regelungsvorrichtung 1 auf, wie in Fig. 1 dargestellt. Ein Knoten KN, welcher erkennt, dass die bei ihm lokal vorhandene Spannung des Verteilnetzes VN oberhalb oder unterhalb eines zulässigen Netzspannungsbereichs liegt, wird bei dem erfindungsgemäßen Verfahren von einem Slave-Betrieb SB in einen Master-Betrieb MB umgeschaltet, wobei der in dem Master-Betrieb MB umgeschaltete Knoten KN durch Bezug oder durch Einspeisung von Blindleistung Q die lokal vorhandene Spannung U zum Erreichen des zulässigen Netzspannungsbereichs regelt.
Darüber hinaus zeigt der in den Master-Betrieb MB umgeschaltete Knoten weiteren Knoten, die sich in einem Slave-Betrieb SB befinden, den lokalen Regelungsvorgang und dessen Umfang an, indem der in den Master-Betrieb MB geschaltete Knoten der durch ihn aus dem Verteilnetz VN bezogenen oder der durch ihn in das Verteilnetz VN eingespeisten Blindleistung Q ein Anzeigesignalmuster ASM aufmoduliert, das einen Signalparameter aufweist, welcher proportional zu der Amplitude der durch den Knoten KN bezogenen oder eingespeisten Blindleistung Q ist.

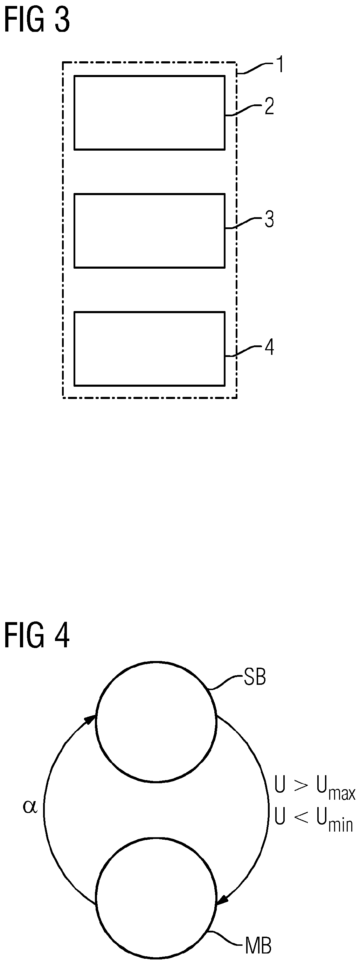

Die Knoten KN des Verteilnetzes VN sind bei dem erfindungsgemäßen Verfahren somit zwischen zwei Betriebsmodi bzw. Betriebsarten umschaltbar, wie in dem Zustandgraphen gemäß Fig. 4 dargestellt. Das Verteilnetz VN verbindet eine Vielzahl von Knoten KN über Netzleitungen NL miteinander, wobei zumindest ein Teil der Knoten KN des Verteilnetzes VN über eine Spannungsregelung 1 verfügen, wie in Fig. 1 dargestellt.

Fig. 3 zeigt ein Blockschaltbild zur Darstellung eines Ausführungsbeispiels einer derartigen Spannungsregelung 1. Die Spannungsregelung 1 weist demnach eine Steuereinheit 2 auf, die an dem jeweiligen Knoten KN von einem Slave-Betrieb SB in einen Master-Betrieb MB umschaltet, sofern eine an dem Knoten KN lokal vorhandene Spannung des Verteilnetzes VN oberhalb oder unterhalb eines zulässigen Netzspannungsbereichs des Verteilnetzes liegt. Die Regelungsvorrichtung 1 ist somit in der Lage, die an dem Knoten KN vorhandene Spannung U, beispielsweise eine an einem Einspeisepunkt bzw. dem Hausanschluss HAS vorhandene Spannung U zu messen und hinsichtlich eines zulässigen Netzspannungsbereichs des Verteilnetzes VN auszuwerten. Die Regelungsvorrichtung 1 enthält ferner eine Spannungsregelungseinheit 3, die in dem Master-Betrieb MB durch Bezug oder durch Einspeisung von Blindleistung Q die lokal vorhandene Spannung bis zum Erreichen des zulässigen Netzspannungsbereichs regelt. Darüber hinaus verfügt die Regelungsvorrichtung 1 über eine Modulationseinheit 4, welche in dem Master-Betrieb MB der eingespeisten oder bezogenen Blindleistung Q ein Anzeigesignalmuster aufmoduliert, welches einen Signalparameter besitzt, der proportional zu der Amplitude der eingespeisten oder bezogenen Blindleistung Q ist. Bei einer möglichen Ausführungsform handelt es sich bei dem aufmodulierten Anzeigesignalmuster um ein Sinussignal. Alternativ kann auch beispielsweise ein Rechtecksignal aufmoduliert werden. Bei einer möglichen Ausführungsform weist das Sinussignal bzw. Rechtecksignal eine Amplitude auf, die proportional zu der Amplitude der Blindleistung Q ist, die durch den im Master-Betrieb MB befindlichen Knoten KN aus dem Verteilnetz VN bezogen wird oder durch den im Master-Betrieb MB befindlichen Knoten KN in das Verteilnetz VN eingespeist wird.

Das generierte Anzeigesignalmuster wird von dem lokal regelnden Knoten KN, welcher in den Master-Betrieb MB umgeschaltet hat, an übrige Knoten KN des Verteilnetzes VN, welche sich noch im Slave-Betriebsmodus befinden, über die Netzleitungen NL übertragen. Der in den Master-Betrieb MB umgeschaltete Knoten bezieht so lange Blindleistung Q, bis seine lokale Spannung einen zusätzlichen Wert innerhalb des vorgegebenen zulässigen Netzspannungsbereichs erreicht. Die Regelung der lokalen Spannung U kann dabei durch den in den Master-Betrieb MB geschalteten Knoten KN beispielsweise mittels eines Integralreglers IR oder eines P-Reglers erfolgen. Der in den Master-Betrieb MB umgeschaltete Knoten KN prägt der durch ihn bezogenen bzw. eingespeisten Blindleistung Q ein Anzeigesignalmuster, beispielsweise ein Sinussignal, auf, wobei dieses Signalmuster einen Signalparameter besitzt, der proportional zu der bezogenen bzw. eingespeisten Blindleistung Q ist. Bei dem Signalparameter kann es sich alternativ auch um die Frequenz f des aufgeprägten Anzeigesignalmusters handeln. Falls die lokale Spannung U oberhalb einer maximalen zulässigen Netzspannung des zulässigen Spannungsbereichs ist ($U > U_{max}$), bezieht der jeweilige Knoten KN Blindleistung Q. Falls die lokale Spannung unterhalb einer Minimalspannung des zulässigen Netzspannungsbereichs liegt ($U < U_{min}$), wird Blindleistung Q in das Verteilnetz VN durch den Knoten KN eingespeist. Die Amplitude der eingespeisten oder bezogenen Blindleistung Q wird in dem Anzeigesignalmuster, welches durch eine Generatoreinheit des jeweiligen Knotens KN erzeugt wird, anderen Knoten KN des Verteilnetzes VN mitgeteilt.

Bei einer möglichen Ausführungsform handelt es sich bei dem aufmodulierten Anzeigesignalmuster um ein durch Blindleistung aufmoduliertes Sinussignal:

$$Q_i = (Q_{i\_}Q_M) + Q_M \cdot \sin(\omega \cdot t)$$

$$Q_M = \frac{Q_i}{Q_i^{max}} \cdot Q_0 \tag{1}$$

wobei mithilfe des schwankenden Anteils der Blindleistung Q mit der Blindleistungsamplitude $Q_M$ der in dem Master-Betrieb MB befindliche Knoten KN den übrigen Knoten mitteilt, welchen Anteil der Blindleistung Q der in dem Master-Betrieb MB befindliche Knoten aktuell zur lokalen Spannungsregelung verwendet. Die Blindleistungsmenge $Q_0$ beschreibt einen festen Parameter für alle Wechselrichter in Knoten, welcher den maximalen Modulationshub vorgibt. Die übrigen im Slave-Betrieb SB befindlichen Knoten KN des Verteilnetzes VN folgen somit der lokalen Spannungsregelung des im Master-Betrieb MB geschalteten Knotens KN und führen dementsprechend unterstützende Maßnahmen durch. Die anderen in dem Slave-Betrieb SB befindlichen Knoten des Verteilnetzes VN nehmen somit bei Empfang des Anzeigesignalmusters von dem in den Master-Betrieb MB umgeschalteten Knoten KN unterstützende Maßnahmen für die Regelung der lokal vorhandenen Spannung des in den Master-Betrieb MB umgeschalteten Knotens im zulässigen Netzspannungsbereich vor. Die im Slave-Betrieb SB befindlichen Knoten beobachten ihre lokale Spannung und detektieren Spannungsänderungen mittels des aufmodulierten Anzeigesignalmusters ASM, beispielsweise mittels:

$$z_i(t) = \int_{t-T}^{t} U_i(\tau) \cdot \sin(\omega \cdot \tau) \, d\tau \tag{2}$$

$$T = k \cdot \frac{2\pi}{\omega}$$

Sobald ein entsprechendes Anzeigesignalmuster durch einen im Slave-Betrieb SB befindlichen Knoten erkannt wurde, unterstützt der jeweilige Knoten den im Master-Betrieb MB befindlichen Knoten KN des Verteilnetzes VN.

Bei einer möglichen Ausführungsform besteht die unterstützende Maßnahme eines in einem Slave-Betrieb SB befindlichen Knotens KN darin, dass der jeweilige Knoten eine Blindleistung Q in einem Umfang bezieht oder einspeist, der proportional zu dem Signalparameter des aufmodulierten Anzeigesignalmusters ist, das der jeweilige im Slave-Betrieb SB befindliche Knoten von dem im Master-Betrieb MB geschalteten Knoten über das Verteilnetz VN empfängt. Beispielsweise kann ein Wechselrichter des im Slave-Betrieb SB befindlichen Knotens KN eine Blindleistung Q beziehen, die im Umfang proportional zur Amplitude des aufmodulierten Anzeigesignalmusters ASM ist:

$$Q_i(t) = K_i \cdot z_i(t) \tag{3}$$

Bei einer möglichen Ausführungsform weist ein Knoten KN des Verteilnetzes einen darin vorhandenen Transformator auf. Die unterstützende Maßnahme eines in einem Slave-Betrieb SB befindlichen Knotens KN kann daher darin bestehen, dass der jeweilige Knoten KN ein Überspannungsverhältnis eines darin vorhandenen Transformators in Abhängigkeit von dem Signalparameter des aufmodulierten Anzeigesignalmusters schaltet, das der jeweilige Knoten KN von dem in den Master-Betrieb MB geschalteten Knoten KN über das Verteilnetz VN empfängt. Dabei kann der regelbare Transformator des im Slave-Betrieb SB befindlichen Knotens Schaltvorgänge ausführen, um beispielsweise eine Spannung in einem Ortsnetz abzusenken und somit den in dem Master-Betrieb MB umgeschalteten Knoten KN bei einer Regelung zur Senkung einer Spannung zu unterstützen. Über die Modulation des Blindleistungsbezugs wird ein Anzeigesignalmuster ASM generiert, um eine Schaltentscheidung hinsichtlich des Transformators TR zu beeinflussen. Da sich jedoch in der Nähe des Transformators TR die lokal gemessene Spannung selbst bei Blindleistungsschwankungen kaum verändert, wird bei einer bevorzugten Ausführungsform in der Nähe des Transformators TR die dort vorhandene Blindleistung Q des Verteilnetzes direkt gemessen, um die aufmodulierte Blindleistung zu berechnen:

$$z_i(t) = \int_{t-T}^{t} Q_i(\tau) \cdot \sin(\omega \cdot \tau) d\tau \qquad (4)$$

Hierdurch wird die Erkennung der Blindleistungsmodulation auch in der Nähe des Transformators ermöglicht. Erkennt der Knoten KN, in dem der jeweilige Transformator vorhanden ist, eine hohe Blindleistungsmodulation, stellt dies ein Maß für vorhandene Spannungsprobleme am distalen Ende des jeweiligen Verteilnetzes VN dar, sodass der jeweilige Knoten KN seine Schaltentscheidung hinsichtlich seiner Schaltstrategie F und der Schalterstellung $S_{TR}$ dahingehend optimieren kann:

$$S_{TR}(t + 1) = F(S_{TR}(t), U(t), \ldots, z_{TR}(t)) \qquad (5)$$

Wechselt ein im Slave-Betrieb SB befindlicher Knoten KN in einen Master-Betrieb MB, wobei bereits ein weiterer Knoten im Master-Betrieb in dem jeweiligen Netz aktiv ist, wird sein Anzeigesignalmuster vorzugsweise mit demjenigen des anderen Master-Knotens synchronisiert. Die Spannungsschwankungen an den im Slave-Betrieb SB befindlichen Knoten KN werden durch den zusätzlichen im Master-Betrieb MB geschalteten Knoten somit verstärkt, wodurch auch die Aktivität der übrigen noch im Slave-Betrieb SB befindlichen Knoten im Rahmen ihrer technischen Möglichkeiten weiter gesteigert wird.

Bei einer möglichen Ausführungsform des erfindungsgemäßen Verfahrens wird dieses in einem Niederspannungsnetz NSN bzw. Ortsnetz eingesetzt. Bei einer weiteren möglichen Ausführungsform des erfindungsgemäßen Verfahrens wird dieses zusätzlich in einem Mittelspannungsnetz MSN eingesetzt, an dem mehrere Niederspannungsnetze angeschlossen sein können. Um eine mögliche Kopplung zwischen den beiden Netzen zu vermeiden, erfolgt vorzugsweise eine Trennung der Anzeigesignalmuster, um zu kennzeichnen, ob der das Anzeigemuster erzeugende Knoten ein Knoten des Niederspannungsnetzes NSN oder des Mittelspannungsnetzes MSN ist.

Bei einer möglichen Ausführungsform des erfindungsgemäßen Verfahrens moduliert der in den Master-Betrieb MB geschaltete Knoten KN des Verteilnetzes VN bei Bezug einer Blindleistung Q von dem Verteilnetz VN ein erstes Anzeigesignalmuster ASM1 der von ihm bezogenen Blindleistung Q auf. Das erste Anzeigesignalmuster ASM1 wird vorzugsweise verwendet, wenn es sich bei dem in den Master-Betrieb MB geschalteten Knoten KN um einen Knoten eines Niederspannungsnetzes NSN handelt. Weiterhin kann der in den Master-Betrieb MB geschaltete Knoten KN des Verteilnetzes VN bei Einspeisen einer Blindleistung Q in das Verteilnetz, insbesondere Niederspannungsnetz, ein zweites Anzeigesignalmuster ASM2 der von ihm eingespeisten Blindleistung Q aufmodulieren.

Bei einer möglichen Ausführungsform des erfindungsgemäßen Verfahrens kann ein in den Master-Betrieb MB geschalteter Knoten bei Bezug einer Blindleistung Q von dem Verteilnetz VN der von ihm bezogenen Blindleistung Q ein drittes Anzeigesignalmuster ASM3 aufmodulieren, sofern es sich bei dem in den Master-Betrieb MB geschalteten Knoten KN um einen Knoten des Mittelspannungsnetzes MSN handelt. Darüber hinaus kann der in den Master-Betrieb MB geschaltete Knoten des Mittelspannungsnetzes MSN bei Einspeisen einer Blindleistung Q in das Mittelspannungsnetz MSN ein viertes Anzeigesignalmuster ASM4 der eingespeisten Blindleistung Q aufmodulieren. Auf diese Weise gibt das aufmodulierte Anzeigesignalmuster ASM nicht nur an, ob Blindleistung Q von einem Knoten KN eingespeist oder bezogen wird, sondern zusätzlich auch, ob es sich bei dem einspeisenden bzw. beziehenden Knoten KN um einen Knoten des Mittelspannungs- oder des Niederspannungsnetzes handelt.

Weitere Varianten sind möglich. Beispielsweise können verschiedene Spannungsnetze, die mit einem Mittelspannungsnetz verbunden sind, jeweils über eigene für sie individuelle Anzeigesignalmuster ASM verfügen.

Besteht eine Kopplung zwischen einem Mittelspannungsnetz MSN und einem Niederspannungsnetz NSN, kann bei einer möglichen Ausführungsvariante der betreffende Ortsnetztrafo entsprechend aufgerüstet werden, damit Modulationssignale auf der Mittelspannungsebene auch durch Knoten des Niederspannungsnetzes bzw. Ortsnetzes detektierbar sind. Eine mögliche funktionelle Erweiterung eines Ortsnetztrafos könnte darin bestehen, eine vorhandene Modulation auf der Mittelspannungsebene zu erkennen und mit geeigneter Amplitude an das jeweilige Ortsnetz bzw.

Niederspannungsnetz weiterzugeben. Dadurch könnten steuerbare Elemente des Ortsnetzes Blindleistung Q erzeugen bzw. verbrauchen, wodurch die Ortsnetze eines Mittelspannungsnetzes als Blindleistungsaktoren des Mittelspannungsnetzes MSN fungieren.

Bei einer möglichen Ausführungsvariante kann zwischen den verschiedenen Situationen unterschieden werden, indem verschiedene Modulationsmuster bzw. Anzeigesignalmuster eingesetzt werden. Beispielsweise können zwei verschiedene Anzeigesignalmuster ASM eingesetzt werden, um eine Amplitude und das Vorzeichen der bezogenen bzw. eingespeisten Blindleistung Q auf ein Ortsnetz zu codieren. Darüber hinaus können zwei verschiedene Anzeigesignalmuster ASM eingesetzt werden, um eine Amplitude und ein Vorzeichen des Blindleistungsbezugs bzw. der Blindleistungseinspeisung auf Mittelspannungsebene zu codieren.

Bei einer möglichen Ausführungsvariante des erfindungsgemäßen Verfahren können neben Wechselrichtern und Transformatoren auch weitere steuerbare Aktoren bzw. Elemente des jeweiligen Verteilnetzes VN in das erfindungsgemäße Regelungsverfahren mit eingebunden werden, um unterstützende Maßnahmen zur Regelung der Spannung U in einem zulässigen Netzspannungsbereich durchzuführen. Abhängig von der jeweiligen Funktion und Position der weiteren steuerbaren Bauelemente eines Verteilnetzes VN kann bei diesen Bauelementen das Decodieren der Blindleistungsanforderung über Modulation ihrer Knotenspannung oder dem Blindleistungsfluss erfolgen.

Fig. 2 zeigt schematisch ein Ausführungsbeispiel für ein Verteilnetz VN mit verschiedenen Knoten $KN_1$ bis $KN_7$, die sternförmig an den Knoten $KN_1$ angeschlossen sind, und beispielsweise über einen Transformator TR mit einem Mittelspannungsnetz MSN verbunden sein kann. Der Knoten $KN_i$ weist eine lokale Spannung $U_i$, eine bezogene bzw. eingespeiste Wirkleistung $P_i$ sowie eine bezogene oder eingespeiste Blindleistung $Q_i$ auf. Bei dem erfindungsgemäßen Verfahren zur Regelung einer Spannung in dem Verteilnetz VN wird erreicht, dass die Spannungen $U_1$ bis $U_7$ der verschiedenen Knoten $KN_1$ bis $KN_7$ in einem zulässigen Netzspannungsbereich liegen. Bei dem erfindungsgemäßen Verfahren ist es möglich, dass ein Wechselrichter eines Knotens $KN_i$ Informationen bzw. Daten über ein lokales Spannungsproblem, beispielsweise ein Überschreiten einer zulässigen Maximalspannung $U_{max}$, direkt durch Modulation der Blindleistung Q an alle anderen Aktoren des Verteilnetzes VN überträgt. Auf diese Weise wird bei dem erfindungsgemäßen Verfahren die Führung der Spannungsregelung an denjenigen Knoten KN innerhalb des Verteilnetzes VN verlagert, an dem tatsächlich eine lokale Spannungsabweichung von einem zulässigen Netzspannungsbereich aufgetreten ist und der somit tatsächlich für diese Rolle am besten geeignet ist.

Darüber hinaus kann durch die bewusste Kommunikation über eine Amplitudenmodulation der Blindleistung Q als Stellgröße erreicht werden, dass die Knoten bzw. Bauelemente mit einer geringeren Entfernung zu dem in den Master-Betrieb MB geschalteten Knoten sich stärker an der Regelung beteiligen als weiter entfernte Knoten bzw. Bauelemente. Im Hinblick auf die Beseitigung eines Spannungsproblems innerhalb des Verteilnetzes VN ist dieses Verhalten sehr vorteilhaft und bedarf keiner weiteren Kommunikation zwischen den Knoten KN und keiner Kommunikationsinfrastruktur außerhalb des elektrischen Verteilnetzes VN. Das aufmodulierte Anzeigesignalmuster ASM eignet sich somit sowohl zur Übertragung der Signalstärke bzw. Angabe der aufmodulierten Blindleistung Q als auch zur Angabe einer Entfernung zu der jeweiligen Quelle, d.h. des Wechselrichters des in den Master-Betrieb MB geschalteten Knotens, welcher mit einem Spannungsproblem konfrontiert ist.

Bei einer möglichen Ausführungsform erfolgt die Übertragung des Vorzeichens der Stellgröße, d.h. der Blindleistung Q, in einem anderen Kommunikationskanal, beispielsweise mithilfe einer anderen Frequenz oder einer anderen Codierung, beispielsweise Phase. Weiterhin ist es möglich, mit dem erfindungsgemäßen Verfahren die Regelung des Mittelspannungsnetzes MSN von einer Regelung des Ortsnetzes bzw. Niederspannungsnetzes NSN zu trennen. In Nähe des Transformators TR kann bei einer möglichen Ausführungsvariante statt einer Spannungsmessung eine direkte Messung der Blindleistung Q erfolgen. Dadurch erfolgt bei dem erfindungsgemäßen Verfahren eine dezentrale Entscheidung, ob der lokale Regler in einem Master-Betrieb MB oder Slave-Betriebsmodus SB läuft.

Bei dem erfindungsgemäßen Verfahren erfolgt das Schalten eines regelbaren Ortsnetztransformators TR vorzugsweise auf Basis von Messungen an den Problemstellen innerhalb des Verteilnetzes VN, da dieses Schalten eine deutlich bessere Schaltstrategie darstellt als eine Schaltstrategie auf Basis einer am Transformator TR selbst vorhandenen Spannung. Bei dem erfindungsgemäßen Verfahren ist für den Informationsaustausch zwischen den Knoten KN des Verteilnetzes VN zur Regelung der Spannung U keine zusätzliche Kommunikationsinfrastruktur notwendig. Das erfindungsgemäße Verfahren kann in einfacher Weise durch Modifikation der jeweiligen Reglersoftware und einer Signalauswertung am Ortsnetztransformator und auf den jeweiligen Wechselrichtern der Knoten KN implementiert werden. Bei einer möglichen Ausführungsform kann das Anzeigesignalmuster ASM mit einer sehr niedrigen Frequenz von unter 1 Hz der Blindleistung Q aufmoduliert werden. Gegenüber einer herkömmlichen Powerline-Kommunikation PLC mit Trägersignalen von > 1 kHz besteht hierbei der Vorteil, dass das aufmodulierte Signal wegen seiner sehr niedrigen Frequenz von weniger als 1 Hz im das Verteilnetz VN so gut wie nicht gedämpft wird. Das erfindungsgemäße Verfahren bietet zudem die Möglichkeit, über geeignete unterschiedliche Modulationen verschiedene Informationen zwischen den Knoten KN zu übertragen, beispielsweise ob ein Spannungsproblem bezüglich Über- oder Unterspannung vorliegt oder ob das Spannungsproblem in einem Niederspannungsnetz NSN oder einem übergeordneten Mittelspannungsnetz MSN auftritt.

Durch die Kopplung einer Slave-Aktivität eines in den Slave-Betrieb SB umgeschalteten Knotens KN an die Amplitude der detektierten Spannungsschwankungen wird bei dem erfindungsgemäßen Verfahren zudem automatisch eine Selektion der dafür effektivsten Wechselrichter innerhalb des Verteilnetzes VN im Hinblick auf das aktuell aufgetretene Spannungsproblem erreicht. Dies liegt daran, dass derjenige Knoten KN, welcher einen großen Einfluss auf die Spannung U am aktuellen Problemknoten bzw. Masterknoten hat, auch stark von diesen beeinflusst wird. Daher sieht ein derartiger im Slave-Betrieb SB befindlicher Knoten eine stärkere Spannungsschwankung ΔU als weiter entfernte Knoten KN innerhalb des Verteilnetzes VN. Durch die Koordination der verschiedenen Aktoren wird die Stabilität des Systems deutlich gesteigert. Ein weiterer Vorteil des erfindungsgemäßen Verfahrens besteht darin, dass die Parametrisierung des Systems, bzw. Versorgungsnetzes, weitgehend ohne ein detailliertes Simulationsmodell erfolgen kann. Beispielsweise ist es möglich, bei der Installation eines Wechselrichters oder eines Knotens KN in festen zeitlichen Zyklen lokal ein Blindleistungs-Testsignal zu erzeugen, welches zu Spannungsschwankungen führt. Anhand der sich ergebenden Spannungsschwankungen kann durch diese lokale Maßnahmen erkannt werden, wie geeignet der jeweilige Wechselrichter zur Beeinflussung der Spannung mittels Blindleistungsbezug oder Blindleistungseinspeisung ist und wie groß die zu erwartende Amplitude der Spannungsschwankung an dem Knoten KN ist, falls ein weiter außerhalb liegender Wechselrichter aufmodulierte Blindleistung erzeugt. Aufgrund einer Leistungserhaltung macht es für die Spannungsschwankung an einem betrachteten Knoten KN des Verteilnetzes VN nahezu keinen Unterschied, ob der Blindleistungsbezug durch den Knoten KN selbst oder einen weiter außen liegenden Knoten KN des Verteilnetzes VN stattfindet.

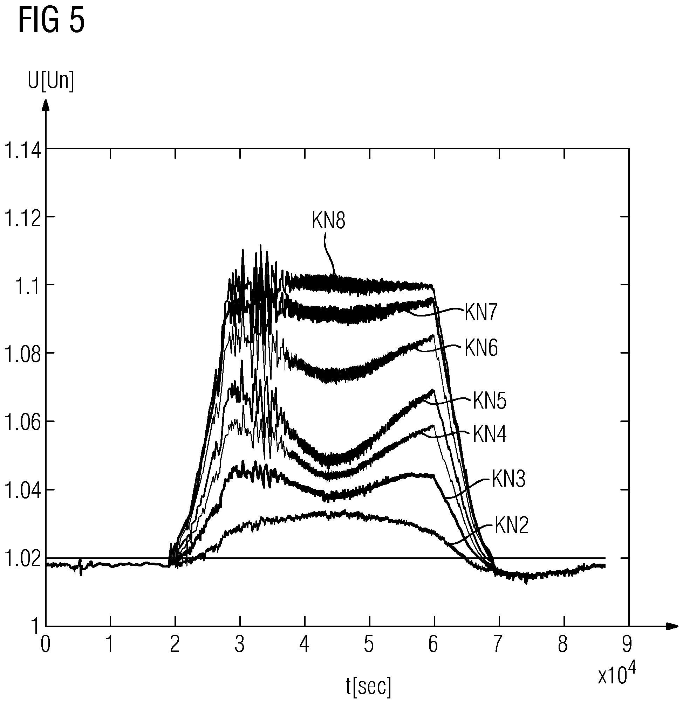

Fig. 5 zeigt beispielhaft einen Spannungsverlauf der verschiedenen Knoten KN eines Verteilnetzes VN, bei dem mehrere Knoten $KN_1$ bis $KN_8$ mit einer Stichleitung verschaltet sind. Bei dem dargestellten Beispiel ist an dem Knoten $KN_1$ der Transformator TR des Verteilnetzes VN vorgesehen. An dem Knoten $KN_2$ ist eine Last angebracht, die eine Mischung bzw. eine Ersatzlast von verschiedenen Energieverbrauchern des Verteilnetzes VN darstellt. An dem Knoten $KN_3$ bis $KN_8$ sind jeweils Photovoltaikanlagen PV installiert. Dabei speisen alle Photovoltaikanlagen die gleiche Wirkleistung P in das Verteilnetz VN ein. Bei dem dargestellten Beispiel tritt eine Verletzung des zulässigen Spannungsbereichs von 110 % zum ersten Mal bei dem Wechselrichter am Knoten $KN_8$ auf, der das Ende der Stichleitung bildet. Dieser Wechselrichter bzw. Knoten $KN_8$ schaltet vom Slave-Betrieb SB in den Master-Betrieb MB um und führt die erfindungsgemäße Regelung durch. Fig. 5 zeigt den Spannungsverlauf an den verschiedenen Knoten.

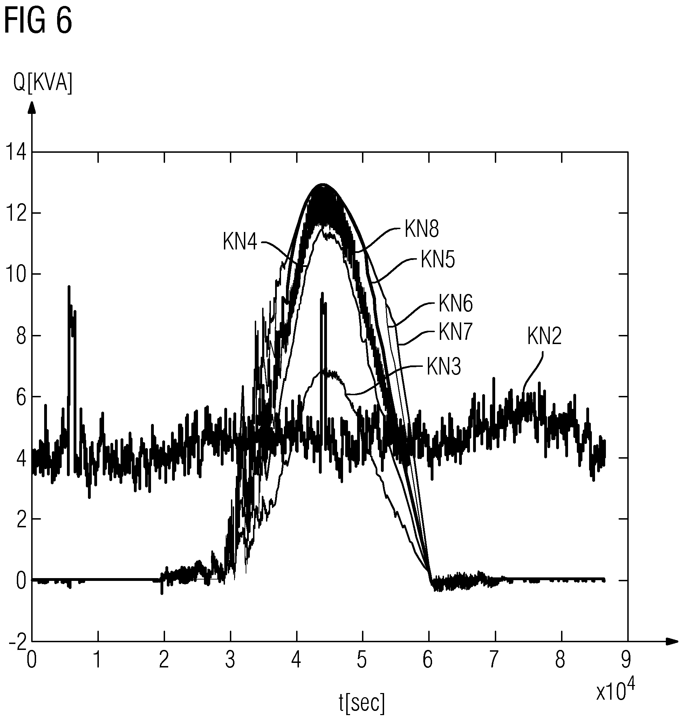

Fig. 6 zeigt den Blindleistungsbezug der verschiedenen Knoten $KN_2$ bis $KN_8$, d.h. sowohl der Ersatzlast als auch aller Wechselrichter. Wie man aus den Figuren 5, 6 erkennen kann, wird durch den koordinierten Blindleistungsbezug der Wechselrichter die zulässige Spannung von 110 % an dem betroffenen Knoten $KN_8$ eingehalten. Die Menge der bezogenen Blindleistung Q ist der tatsächlich benötigten Menge insofern gut angepasst, als dass die Spannung U am Knoten $KN_8$ tatsächlich bis auf den erlaubten Spannungswert ansteigt.

Somit ist die Menge der bezogenen Blindleistung Q tatsächlich nötig, um das dort aufgetretene Spannungsproblem zu beseitigen. In einer Situation, in der zu einem Zeitpunkt $t_A$, beispielsweise $2 \times 10^4$ Sekunden, die Sonne aufgeht und die von den Photovoltaikanlagen PV der Knoten $KN_3$ bis $KN_8$ erzeugte Energie in das Verteilnetz VN eingespeist wird, wird durch die erfindungsgemäße Regelung ein Überschreiten der zulässigen Netzspannung im Verteilnetz VN verhindert. Zu einem Zeitpunkt $t_B$ von etwa $6 \times 10^4$ Sekunden geht die Sonne wieder unter und die Photovoltaikanlagen PV generieren weniger Energie, die in das Verteilnetz VN eingespeist wird. Das in Fig. 5 dargestellte Rauschen im Spannungsverlauf ist durch das Muster ASM im Blindleistungsbezug Q bedingt und weist eine maximale Amplitude von etwa 0,004 bezogen auf die Nennleistung $U_n$ auf.

Fig. 6 zeigt den Blindleistungsbezug an den verschiedenen Knoten KN des Verteilnetzes VN. Fig. 6 zeigt deutlich das Folgeverhalten zwischen den Wechselrichtern im Slave-Betrieb SB und dem Master-Knoten. Die Blindleistung Q, welche durch die Ersatzlast bezogen wird, stört die Koordination bzw. Spannungsregelung zwischen dem in den Master-Betrieb MB geschalteten Knoten und dem im Slave-Betrieb SB befindlichen Knoten bzw. Wechselrichtern nicht.

Das erfindungsgemäße Verfahren erlaubt eine Spannungsregelung in einem Verteilnetz VN bzw. einem Ortsnetz durch Vernetzung von regelbaren Transformatoren TR und dezentralen Blindleistungsspannungsregelungen. Das erfindungsgemäße Verfahren kann sowohl für Niederspannungsnetze NSN als auch für Mittelspannungsnetze MSN eingesetzt werden.

**Patentansprüche**

1.  Verfahren zum Regeln einer Spannung (U) in einem Verteilnetz (VN), das Knoten (KN) über Netzleitungen (NL) mit Spannung versorgt,

    wobei ein Knoten (KN) mit einer Messeinheit, welche erkennt, dass die bei dem Knoten (KN) lokal vorhandene Spannung des Verteilnetzes (VN) oberhalb oder unterhalb eines zulässigen Netzspannungsbereichs liegt, mittels einer Steuereinheit (2) von einem Slave-Betrieb (SB) in einen Master-Betrieb (MB) umschaltet und in dem Master-Betrieb (MB) durch Bezug oder durch Einspeisung von Blindleistung (Q) die lokal vorhandene Spannung (U) mittels einer Spannungsregelungseinheit (3) zum Erreichen des zulässigen Netzspannungsbereichs regelt und dies anderen in einem Slave-Betrieb (SB) befindlichen Knoten (KN) des Verteilnetzes (VN) anzeigt, indem der Knoten (KN) der durch ihn bezogenen oder eingespeisten Blindleistung (Q) mittels einer Modulationseinheit (4) ein Anzeigesignalmuster (ASM) aufmoduliert, das einen Signalparameter aufweist, welcher proportional zu der Amplitude der durch den Knoten (KN) bezogenen oder eingespeisten Blindleistung (Q) ist, wobei, falls bereits ein weiterer Knoten (KN) in dem Verteilnetz (VN) in dem Master-Betrieb (MB) aktiv ist, das Anzeigesignalmuster (ASM) des von dem Slave-Betrieb (SB) in den Master-Betrieb (MB) umschaltenden Knotens (KN) mit dem Anzeigesignalmuster (ASM) des bereits in dem Master-Betrieb (MB) aktiven Knoten (KN) synchronisiert wird;

wobei ein in einem Slave-Betrieb (SB) befindlicher Knoten (KN) des Verteilnetzes (VN) nach Empfang und Erkennen, mittels der Messeinheit des in dem Slave-Betrieb (SB) befindlichen Knotens (KN), des Anzeigesignalmusters (ASM) von dem in den Master-Betrieb (MB) umgeschalteten Knoten (KN) als unterstützende Maßnahme für die Regelung der lokal vorhandenen Spannung des in den Master-Betrieb (MB) umgeschalteten Knotens (KN) in dem zulässigen Netzspannungsbereich mittels der Spannungsregelungseinheit (4) des in dem Slave-Betrieb (SB) befindlicher Knotens (KN) eine Blindleistung (Q) in einem Umfang bezieht oder einspeist, der proportional zu dem Signalparameter des aufmodulierten Anzeigesignalmusters (ASM) ist, das der in dem Slave-Betrieb (SB) befindliche Knoten (KN) von dem in den Master-Betrieb (MB) umgeschalteten Knoten (KN) über das Verteilnetz (VN) empfängt;

und/oder

wobei ein in einem Slave-Betrieb (SB) befindlicher Knoten (KN) des Verteilnetzes (VN) nach Empfang und Erkennen, mittels der Messeinheit des in dem Slave-Betrieb (SB) befindlichen Knotens (KN), des Anzeigesignalmusters (ASM) von dem in den Master-Betrieb (MB) umgeschalteten Knoten (KN) als unterstützende Maßnahme für die Regelung der lokal vorhandenen Spannung des in den Master-Betrieb (MB) umgeschalteten Knotens (KN) in dem zulässigen Netzspannungsbereich ein Überspannungsverhältnis eines an dem jeweiligen Knoten (KN) vorhandenen Transformators (TR) in Abhängigkeit von dem Signalparameter des aufmodulierten Anzeigesignalmusters (ASM) schaltet, das der in dem Slave-Betrieb (SB) befindliche Knoten (KN) von dem in den Master-Betrieb (MB) umgeschalteten Knoten über das Verteilnetz (VN) empfängt.

2. Verfahren nach Anspruch 1,
wobei der Signalparameter des von dem im Master-Betrieb (MB) befindlichen Knoten (KN) aufmodulierten Anzeigesignalmusters (ASM) eine Signalamplitude oder eine Signalfrequenz ist, die proportional zu der Amplitude der von dem in dem Master-Betrieb (MB) befindlichen Knoten zur Regelung seiner lokalen Spannung bezogenen oder eingespeisten Blindleistung (Q) ist.

3. Verfahren nach einem der vorangehenden Ansprüche 1 oder 2,
wobei der in dem Master-Betrieb (MB) befindliche Knoten (KN) in einen Slave-Betrieb (SB) zurückschaltet, sobald die durch den in den Master-Betrieb (MB) umgeschalteten Knoten (KN) lokal vorgenommene Spannungsregelung und/oder die unterstützenden Maßnahmen durch die übrigen in dem Slave-Betrieb (SB) befindlichen Knoten des Verteilnetzes (VN) dazu geführt haben, dass der in dem Master-Betrieb (MB) befindliche Knoten (KN) keine Blindleistung (Q) mehr aus dem Verteilnetz (VN) bezieht oder darin einspeist.

4. Verfahren nach einem der vorangehenden Ansprüche 1 bis 3,
wobei das aufmodulierte Anzeigesignalmuster (ASM) mit der Spannung des Verteilnetzes (VN) synchronisiert wird.

5. Verfahren nach einem der vorangehenden Ansprüche 1 bis 4,
wobei der in den Master-Betrieb (MB) umgeschaltete Knoten (KN) des Verteilnetzes (VN) bei Bezug einer Blindleistung (Q) von dem Verteilnetz (VN) ein erstes Anzeigesignalmuster (ASM1) der bezogenen Blindleistung (Q) aufmoduliert und bei Einspeisen einer Blindleistung (Q) in das Verteilnetz (VN) ein zweites Anzeigesignalmuster (ASM2) der eingespeisten Blindleistung (Q) aufmoduliert.

6. Verfahren nach einem der vorangehenden Ansprüche 1 bis 5, wobei das Verteilnetz (VN) durch ein Niederspannungsnetz (NSN) gebildet wird.

7. Verfahren nach Anspruch 6,
wobei das Niederspannungsnetz (NSN) an mindestens einem Knoten an ein Mittelspannungsnetz (MSN) angeschlossen ist.

8. Verfahren nach Anspruch 7,
wobei ein in den Master-Betrieb (MB) umgeschalteter Knoten (KN) des Mittelspannungsnetzes (MSN) bei Bezug einer Blindleistung (Q) von dem Mittelspannungsnetz (MSN) ein drittes Anzeigesignalmuster (ASM3) der bezogenen Blindleistung (Q) aufmoduliert und bei Einspeisen der Blindleistung (Q) in das Mittelspannungsnetz (MSN) ein viertes Anzeigesignalmuster (ASM4) der eingespeisten Blindleistung (Q) aufmoduliert.

9. Verfahren nach einem der vorangehenden Ansprüche 1 bis 8, wobei das aufmodulierte Anzeigesignalmuster (ASM) ein Sinussignal ist, dessen Amplitude proportional zu der Amplitude des durch den im Master-Betrieb (MB) befindlichen Knoten bezogenen oder eingespeisten Blindleistung (Q) ist.

10. Verfahren nach einem der vorangehenden Ansprüche 1 bis 9, wobei die Regelung der lokalen Spannung (U) durch den in den Master-Betrieb (MB) umgeschalteten Knoten (KN) mittels eines I-Reglers und/oder eines P-Reglers erfolgt.

11. Vorrichtung (1) für einen Knoten (KN) zur Regelung einer Spannung in einem Verteilnetz (VN), das den Knoten (KN) über Netzleitungen (NL) mit Spannung versorgt, mit:

    - einer Steuereinheit (2), die den Knoten (KN) von einem Slave-Betrieb (SB) in einen Master-Betrieb (MB) umschaltet, wenn die an dem Knoten (KN) lokal vorhandene Spannung des Verteilnetzes (VN) oberhalb oder unterhalb eines zulässigen Netzspannungsbereiches des Verteilnetzes (VN) liegt;
    - einer Spannungsregelungseinheit (3), welche in dem Master-Betrieb (MB) durch Bezug oder durch Einspeisung von Blindleistung (Q) die lokal vorhandene Spannung bis zum Erreichen des zulässigen Netzspannungsbereiches regelt;
    - einer Modulationseinheit (4), welche in dem Master-Betrieb (MB) der eingespeisten oder bezogenen Blindleistung (Q) ein Anzeigesignalmuster (ASM) aufmoduliert, das einen Signalparameter aufweist, der proportional zu der Amplitude der eingespeisten oder bezogenen Blindleistung (Q) ist, wobei, falls bereits ein weiterer Knoten (KN) in dem Verteilnetz (VN) in dem Master-Betrieb (MB) aktiv ist, das Anzeigesignalmuster (ASM) des von dem Slave-Betrieb (SB) in den Master-Betrieb (MB) umschaltenden Knotens (KN) mit dem Anzeigesignalmuster (ASM) des bereits in dem Master-Betrieb (MB) aktiven Knoten (KN) synchronisiert wird; und mit
    - einer Messeinheit zum Empfangen und Erkennen des Anzeigesignalmusters (ASM), welches der eingespeisten oder bezogenen Blindleistung (Q) aufmoduliert ist, und zum Erfassen der an dem Knoten (KN) lokal vorhandenen Spannung des Verteilnetzes (VN);

    wobei die Vorrichtung (1) weiterhin derart ausgebildet ist, dass in dem Slave-Betrieb (SB) der Knoten (KN) nach Empfang und Erkennen, mittels der Messeinheit, des Anzeigesignalmusters (ASM) von einem in den Master-Betrieb (MB) umgeschalteten Knoten (KN) als unterstützende Maßnahme für die Regelung der lokal vorhandenen Spannung des in den Master-Betrieb (MB) umgeschalteten Knotens (KN) in dem zulässigen Netzspannungsbereich mittels der Spannungsregelungseinheit (4) eine Blindleistung (Q) in einem Umfang bezieht oder einspeist, der proportional zu dem Signalparameter des aufmodulierten Anzeigesignalmusters (ASM) ist, das der in dem Slave-Betrieb (SB) befindliche Knoten (KN) von dem in den Master-Betrieb (MB) umgeschalteten Knoten (KN) mittels der Messeinheit über das Verteilnetz (VN) empfängt;
    und/oder
    wobei die Vorrichtung (1) derart ausgebildet ist, dass in dem Slave-Betrieb (SB) der Knoten (KN) des Verteilnetzes (VN) nach Empfang und Erkennen, mittels der Messeinheit, des Anzeigesignalmusters (ASM) von einem in den Master-Betrieb (MB) umgeschalteten Knoten (KN), als unterstützende Maßnahme für die Regelung der lokal vorhandenen Spannung des in den Master-Betrieb (MB) umgeschalteten Knotens (KN) in dem zulässigen Netzspannungsbereich ein Überspannungsverhältnis eines an dem in dem Slave-Betrieb (SB) befindlichen Knoten (KN) vorhandenen Transformators (TR) in Abhängigkeit von dem Signalparameter des aufmodulierten Anzeigesignalmusters (ASM) schaltet, das der in dem Slave-Betrieb (SB) befindliche Knoten (KN) von dem in den Master-Betrieb (MB) umgeschalteten Knoten mittels der Messeinheit über das Verteilnetz (VN) empfängt.

12. Verteilnetz (VN), insbesondere Niederspannungsnetz (NSN), das mehrere räumlich verteilte Knoten (KN) über Netzleitungen (NL) mit Spannung versorgt, die jeweils eine Vorrichtung (1) nach Anspruch 11 zur Regelung einer Spannung (U) in dem Verteilnetz (VN) aufweisen.

**Claims**

1. Method for regulating a voltage (U) in a distribution network (VN) that supplies voltage to nodes (KN) via power lines (NL),

wherein a node (KN) having a measuring unit that recognizes that the voltage of the distribution network (VN) that is locally existent to the node (KN), is above or below an admissible voltage range switches over by means of a control unit (2) from a slave mode (SB) to a master mode (MB) and, in the master mode (MB), draws or feeds reactive power (Q) in order to regulate the locally existent voltage (U) by means of a voltage regulation unit (3) to achieve the admissible voltage range and indicates this to other nodes (KN) of the distribution network (VN) that are in a slave mode (SB) by virtue of the node (KN) modulating the reactive power (Q) that it draws or feeds, by means of a modulation unit (4), with an indicator signal pattern (ASM) that has a signal parameter that is proportional to the amplitude of the reactive power (Q) drawn or fed by the node (KN), wherein if a further node (KN) in the distribution network (VN) is already active in the master mode (MB), then the indicator signal pattern (ASM) of the node (KN) switching over from the slave mode (SB) to the master mode (MB) is synchronized with the indicator signal pattern (ASM) of the node (KN) already active in the master mode (MB);

wherein a node (KN) of the distribution network (VN) that is in a slave mode (SB) follows reception and recognition, by means of the measuring unit of the node (KN) that is in the slave mode (SB), of the indicator signal pattern (ASM) from the node (KN) that has switched over to the master mode (MB) as assisting measure for the regulation of the locally existent voltage of the node (KN) that has switched over to the master mode (MB) in the admissible voltage range, by means of the voltage regulation unit (4) of the node (KN) that is in the slave mode (SB), by drawing or feeding a reactive power (Q) to an extent that is proportional to the signal parameter of the indicator signal pattern (ASM) that has been modulated upon that the node (KN) which is in the slave mode (SB) receives via the distribution network (VN) from the node (KN) that has switched over to the master mode (MB);

and/or

wherein a node (KN) of the distribution network (VN) that is in a slave mode (SB) follows reception and recognition, by means of the measuring unit of the node (KN) that is in the slave mode (SB), of the indicator signal pattern (ASM) from the node (KN) that has switched over to the master mode (MB) as assisting measure for the regulation of the locally existent voltage of the node (KN) that has switched over to the master mode (MB) in the admissible voltage range by switching an overvoltage ratio of a transformer (TR) that is existent at the respective node (KN) on the basis of the signal parameter of the indicator signal pattern (ASM) that has been modulated upon that the node (KN) which is in the slave mode (SB) receives via the distribution system (VN) from the node that has switched over to the master mode (MB).

2. Method according to Claim 1, wherein the signal parameter of the indicator signal pattern (ASM) that has been modulated upon by the node (KN) that is in the master mode (MB) is a signal amplitude or a signal frequency that is proportional to the amplitude of the reactive power (Q) drawn or fed by the node that is in the master mode (MB) in order to regulate its local voltage.

3. Method according to one of the preceding Claims 1 or 2,
wherein the node (KN) that is in the master mode (MB) switches back to a slave mode (SB) as soon as the voltage regulation performed locally by the node (KN) that has switched over to the master mode (MB) and/or the assisting measures by the remainder of the nodes of the distribution network (VN) that are in the slave mode (SB) have resulted in the node (KN) that is in the master mode (MB) drawing or feeding no further reactive power (Q) from or to the distribution network (VN).

4. Method according to one of the preceding Claims 1 to 3,
wherein the indicator signal pattern (ASM) that has been modulated upon is synchronized to the voltage of the distribution network (VN).

5. Method according to one of the preceding Claims 1 to 4,
wherein the node (KN) of the distribution network (VN) that has switched over to the master mode (MB) modulates a first indicator signal pattern (ASM1) upon the drawn reactive power (Q) when a reactive power (Q) is drawn from the distribution network (VN) and modulates a second indicator signal pattern (ASM2) upon the fed reactive power (Q) when a reactive power (Q) is fed to the distribution network (VN).

6. Method according to one of the preceding Claims 1 to 5, wherein the distribution network (VN) is formed by a low voltage network (NSN).

7. Method according to Claim 6,
wherein the low voltage network (NSN) has at least one node connected to a medium voltage network (MSN).

8. Method according to Claim 7,

wherein a node (KN) of the medium voltage network (MSN) that has switched over to the master mode (MB) modulates a third indicator signal pattern (ASM3) upon the drawn reactive power (Q) when a reactive power (Q) is drawn from the medium voltage network (MSN) and modulates a fourth indicator signal pattern (ASM4) upon the fed reactive power (Q) when the reactive power (Q) is fed to the medium voltage network (MSN).

9. Method according to one of the preceding Claims 1 to 8,
wherein the indicator signal pattern (ASM) that has been modulated upon is a sinusoidal signal, the amplitude of which is proportional to the amplitude of the reactive power (Q) drawn or fed by the node that is in the master mode (MB).

10. Method according to one of the preceding Claims 1 to 9,
wherein the local voltage (U) is regulated by the node (KN) that has switched over to the master mode (MB) by means of an I controller and/or a P controller.

11. Apparatus (1) for a node (KN) for regulating a voltage in a distribution network (VN) that supplies voltage to the node (KN) via power lines (NL), having:

- a control unit (2) that changes over the node (KN) from a slave mode (SB) to a master mode (MB) when the voltage of the distribution network that is locally existant to the node (KN), is above or below an admissible voltage range for the distribution network (VN);
- a voltage regulation unit (3) that, in the master mode (MB), draws or feeds reactive power (Q) in order to regulate the locally existent voltage until the admissible voltage range is achieved;
- a modulation unit (4) that, in the master mode (MB), modulates the fed or drawn reactive power (Q) upon an indicator signal pattern (ASM) that has a signal parameter that is proportional to the amplitude of the fed or drawn reactive power (Q) wherein if a further node (KN) in the distribution network (VN) is already active in the master mode (MB), then the indicator signal pattern (ASM) of the node (KN) switching over from the slave mode (SB) to the master mode (MB) is synchronized with the indicator signal pattern (ASM) of the node (KN) already active in the master mode (MB); and having
- a measuring unit for receiving and recognizing the indicator signal pattern (ASM) that is modulated upon the fed or drawn reactive power (Q), and for capturing the voltage of the distribution network (VN) that is locally existent at the node (KN);

wherein the apparatus (1) is additionally designed such that in the slave mode (SB) the node (KN) follows reception and recognition, by means of the measuring unit, of the indicator signal pattern (ASM) from a node (KN) that is switched over to the master mode (MB) as assisting measure for the regulation of the locally existent voltage of the node (KN) that is switched over to the master mode (MB) in the admissible voltage range, by means of the voltage regulation unit (4), by drawing or feeding a reactive power (Q) to an extent that is proportional to the signal parameter of the indicator signal pattern (ASM) that has been modulated upon that the node (KN) which is in the slave mode (SB) receives via the distribution network (VN) by means of the measuring unit from the node (KN) that has switched over to the master mode (MB);
and/or
wherein the apparatus (1) is designed such that in the slave mode (SB) the node (KN) of the distribution network (VN) follows reception and recognition, by means of the measuring unit, of the indicator signal pattern (ASM) from a node (KN) that is switched over to the master mode (MB) as assisting measure for the regulation of the locally existent voltage of the node (KN) that is switched over to the master mode (MB) in the admissible voltage range by switching an overvoltage ratio of a transformer (TR) that is existent at the node (KN) that is in the slave mode (SB) on the basis of the signal parameter of the indicator signal pattern (ASM) that has been modulated upon that the node (KN) that is in the slave mode (SB) receives via the distribution network (VN) by means of the measuring unit from the node that has switched over to the master mode (MB).

12. Distribution system (VN), particularly a low voltage network (NSN), that supplies voltage to a plurality of physically distributed nodes (KN) via power lines (NL) that each have an apparatus (1) according to Claim 11 for regulating a voltage (U) in the distribution network (VN).

**Revendications**

1. Procédé de régulation d'une tension (U) dans un réseau de distribution (VN) qui alimente en tension des noeuds (KN) par l'intermédiaire de lignes d'énergie (NL),
dans lequel un noeud (KN) avec une unité de mesure qui détecte que la tension du réseau de distribution (VN) présente localement au noeud (KN) se situe au-dessus ou au-dessous d'une plage de tension de réseau autorisée effectue la commutation, au moyen d'une unité de commande (2), d'un mode esclave (SB) dans un mode maître (MB), et régule en mode maître (MB), par prélèvement ou par injection de puissance réactive (Q), la tension (U) présente localement au moyen d'une unité de régulation de tension (3) pour atteindre la plage de tension de réseau autorisée, et affiche cet autre noeud (KN) du réseau de distribution (VN) qui se trouve en mode esclave (SB), le noeud (KN) de la puissance réactive (Q) prélevée ou injectée par lui modulant, au moyen d'une unité de modulation (4), un motif de signal d'affichage (ASM) qui comprend un paramètre de signal qui est proportionnel à l'amplitude de la puissance réactive (Q) prélevée ou injectée par le noeud (KN), dans lequel, au cas où un autre noeud (KN) serait déjà actif en mode maître (MB) dans le réseau de distribution (VN), le motif de signal d'affichage (ASM) du noeud (KN) effectuant la commutation du mode esclave (SB) dans le mode maître (MB) est synchronisé avec le motif de signal d'affichage (ASM) du noeud (KN) déjà actif en mode maître (MB) ;
dans lequel un noeud (KN) du réseau de distribution (VN) qui se trouve en mode esclave (SB) après réception et détection, au moyen de l'unité de mesure du noeud (KN) qui se trouve en mode esclave (SB), du motif de signal d'affichage (ASM) du noeud (KN) commuté dans le mode maître (MB), prélève ou injecte, comme mesure subsidiaire pour la régulation de la tension présente localement du noeud (KN) commuté dans le mode maître (MB) dans la plage de tension de réseau autorisée au moyen de l'unité de régulation de tension (4) du noeud (KN) qui se trouve en mode esclave (SB), une puissance réactive (Q) dans une mesure qui est proportionnelle au paramètre de signal du motif de signal d'affichage (ASM) modulé que le noeud (KN) qui se trouve en mode esclave (SB) reçoit du noeud (KN) commuté dans le mode maître (MB) par l'intermédiaire du réseau de distribution (VN) ;
et/ou
dans lequel un noeud (KN) du réseau de distribution (VN) qui se trouve en mode esclave (SB) après réception et détection, au moyen de l'unité de mesure du noeud (KN) qui se trouve en mode esclave (SB), du motif de signal d'affichage (ASM) du noeud (KN) commuté dans le mode maître (MB), prélève ou injecte, comme mesure subsidiaire pour la régulation de la tension présente localement du noeud (KN) commuté dans le mode maître (MB) dans la plage de tension de réseau autorisée, commute un rapport de surtension d'un transformateur (TR) présent dans chaque noeud (KN) en fonction du paramètre de signal du motif de signal d'affichage (ASM) modulé que le noeud (KN) qui se trouve en mode esclave (SB) reçoit du noeud commuté dans le mode maître (MB) par l'intermédiaire du réseau de distribution (VN).

2. Procédé selon la revendication 1,
dans lequel le paramètre de signal du motif de signal d'affichage (ASM) modulé par le noeud (KN) qui se trouve en mode maître (MB) est une amplitude de signal ou une fréquence de signal qui est proportionnelle à l'amplitude de la puissance réactive (Q) prélevée ou injectée par le noeud qui se trouve en mode maître (MB), pour la régulation de sa tension locale.

3. Procédé selon l'une des revendications précédentes 1 ou 2,
dans lequel le noeud (KN) qui se trouve en mode maître (MB) rebascule dans un mode esclave (SB) aussitôt que la régulation de tension effectuée localement par le noeud (KN) commuté dans le mode maître (MB) et/ou que les mesures subsidiaires provenant des noeuds restants qui se trouvent en mode esclave (SB) du réseau de distribution (VN) ont conduit à ce que le noeud (KN) qui se trouve en mode maître (MB) ne prélève ou n'y injecte plus aucune puissance réactive (Q) à partir du réseau de distribution (VN).

4. Procédé selon l'une des revendications précédentes 1 à 3,

dans lequel le motif de signal d'affichage (ASM) modulé est synchronisé avec la tension du réseau de distribution (VN).

5. Procédé selon l'une des revendications précédentes 1 à 4,
dans lequel le noeud (KN) commuté dans le mode maître (MB) du réseau de distribution (VN), par prélèvement d'une puissance réactive (Q) à partir du réseau de distribution (VN), module un premier motif de signal d'affichage (ASM1) de la puissance réactive (Q) prélevée, et par injection d'une puissance réactive (Q) dans le réseau de distribution (VN), module un deuxième motif de signal d'affichage (ASM2) de la puissance réactive (Q) injectée.

6. Procédé selon l'une des revendications précédentes 1 à 5,
dans lequel le réseau de distribution (VN) est constitué d'un réseau à basse tension (NSN).

**7.** Procédé selon la revendication 6,
dans lequel le réseau à basse tension (NSN) est connecté en au moins un noeud à un réseau à moyenne tension (MSN).

**8.** Procédé selon la revendication 7,
dans lequel un noeud (KN) commuté dans le mode maître (MB) du réseau à moyenne tension (MSN), par prélèvement d'une puissance réactive (Q) à partir du réseau à moyenne tension (MSN), module un troisième motif de signal d'affichage (ASM3) de la puissance réactive (Q) prélevée, et par injection de la puissance réactive (Q) dans le réseau à moyenne tension (MSN), module un quatrième motif de signal d'affichage (ASM4) de la puissance réactive (Q) injectée.

**9.** Procédé selon l'une des revendications précédentes 1 à 8,
dans lequel le motif de signal d'affichage (ASM) modulé est un signal sinusoïdal dont l'amplitude est proportionnelle à l'amplitude de la puissance réactive (Q) prélevée ou injectée par le noeud qui se trouve en mode maître (MB).

**10.** Procédé selon l'une des revendications précédentes 1 à 9,
dans lequel la régulation de la tension locale (U) est obtenue au moyen d'un régulateur I et/ou d'un régulateur P par le noeud (KN) commuté dans le mode maître (MB).

**11.** Dispositif (1) pour un noeud (KN) pour la régulation d'une tension dans un réseau de distribution (VN) qui alimente en tension le noeud (KN) par l'intermédiaire de lignes d'énergie (NL), avec :

- une unité de commande (2) qui commute le noeud (KN) d'un mode esclave (SB) dans un mode maître (MB) quand la tension du réseau de distribution (VN) présente localement au noeud (KN) se situe au-dessus ou au-dessous d'une plage de tension de réseau autorisée du réseau de distribution (VN) ;
- une unité de régulation de tension (3) qui régule, en mode maître (MB), par prélèvement ou par injection d'une puissance réactive (Q), la tension présente localement jusqu'à obtention de la plage de tension de réseau autorisée ;
- une unité de modulation (4) qui module, en mode maître (MB) de la puissance réactive (Q) injectée ou prélevée, un motif de signal d'affichage (ASM) qui comprend un paramètre de signal qui est proportionnel à l'amplitude de la puissance réactive (Q) injectée ou prélevée, dans laquelle, au cas où un autre noeud (KN) serait déjà actif en mode maître (MB) dans le réseau de distribution (VN), le motif de signal d'affichage (ASM) du noeud (KN) qui effectue la commutation du mode esclave (SB) dans le mode maître (MB) est synchronisé avec le motif de signal d'affichage (ASM) du noeud (KN) déjà actif en mode maître (MB) ; et avec
- une unité de mesure pour la réception et la détection du motif de signal d'affichage (ASM) qui module la puissance réactive (Q) injectée ou prélevée, et pour la détermination de la tension du réseau de distribution (VN) présente localement au noeud (KN) ;

le dispositif (1) étant en outre constitué de sorte qu'en mode esclave (SB) le noeud (KN), après réception et détection, au moyen de l'unité de mesure, du motif de signal d'affichage (ASM) d'un noeud (KN) commuté dans le mode maître (MB), comme mesure subsidiaire pour la régulation de la tension présente localement du noeud (KN) commuté dans le mode maître (MB) dans la plage de tension de réseau autorisée, prélève ou injecte, au moyen de l'unité de régulation de tension (4), une puissance réactive (Q) dans une mesure qui est proportionnelle au paramètre de signal du motif de signal d'affichage (ASM) modulé que le noeud (KN) qui se trouve en mode esclave (SB) reçoit du noeud (KN) commuté dans le mode maître (MB) au moyen de l'unité de mesure par l'intermédiaire du réseau de distribution (VN) ;
et/ou
le dispositif (1) étant constitué de sorte qu'en mode esclave (SB) le noeud (KN) du réseau de distribution (VN), après réception et détection, au moyen de l'unité de mesure, du motif de signal d'affichage (ASM) d'un noeud (KN) commuté dans le mode maître (MB), comme mesure subsidiaire pour la régulation de la tension présente localement du noeud (KN) commuté dans le mode maître (MB) dans la plage de tension de réseau autorisée, commute un rapport de surtension d'un transformateur (TR) présent dans le noeud (KN) qui se trouve en mode esclave (SB) en fonction du paramètre de signal du motif de signal d'affichage (ASM) modulé que le noeud (KN) qui se trouve en mode esclave (SB) reçoit du noeud (KN) commuté dans le mode maître (MB) au moyen de l'unité de mesure par l'intermédiaire du réseau de distribution (VN).

**12.** Réseau de distribution (VN), en particulier réseau à basse tension (NSN), qui alimente en tension, par l'intermédiaire de lignes d'énergie (NL), plusieurs noeuds (KN) spatialement distincts et qui comprennent chacun un dispositif (1) selon la revendication 11 pour la régulation d'une tension (U) dans le réseau de distribution (VN).

# FIG 1

# FIG 2

## FIG 3

## FIG 4

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012119586 A1

- US 8183714 B2

**In der Beschreibung aufgeführte Nicht-Patentliteratur**

- **VON LAAKSONEN, H. et al.** Voltage and Frequency Control of Inverter Based Weak LV Network Microgrid. *INTERNATIONAL CONFERENCE ON FUTURE POWER SYSTEMS (FPS 2005), Amsterdam, Niederlande,* November 2005, ISBN 978-90-78205-02-9, 1-6

- **VON DASGUPTA, S. et al.** A plug and play operational approach for implementation of an Autonomous-Micro-Grid System. *IEEE TRANSACTIONS ON INDUSTRIAL INFORMATICS, Bd. [online prepublication,* 06. April 2012, ISSN 1551-3203, 1-15